(19) Europäisches Patentamt
European Patent Office
Office européen des brevets

(11) **EP 2 902 607 B1**

(12) **EUROPEAN PATENT SPECIFICATION**

(45) Date of publication and mention
of the grant of the patent:
**24.10.2018 Bulletin 2018/43**

(51) Int Cl.:
**F02D 13/02** (2006.01) **F02D 41/02** (2006.01)
**F02D 41/06** (2006.01) **F02D 43/00** (2006.01)
**F02D 45/00** (2006.01) **F02D 41/04** (2006.01)
**F02D 41/40** (2006.01)

(21) Application number: **13841330.7**

(22) Date of filing: **26.07.2013**

(86) International application number:
**PCT/JP2013/070275**

(87) International publication number:
**WO 2014/050287 (03.04.2014 Gazette 2014/14)**

(54) **CYLINDER INJECTION ENGINE CONTROL APPARATUS**

STEUERUNGSVORRICHTUNG FÜR EINEN ZYLINDEREINSPRITZMOTOR

APPAREIL DE COMMANDE DE MOTEUR À INJECTION DANS LE CYLINDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2012 JP 2012213384**

(43) Date of publication of application:
**05.08.2015 Bulletin 2015/32**

(73) Proprietor: **Hitachi Automotive Systems, Ltd.
Hitachinaka-shi, Ibaraki 312-8503 (JP)**

(72) Inventors:
• **KIHARA, Yusuke
Tokyo 100-8280 (JP)**
• **SUKEGAWA, Yoshihiro
Tokyo 100-8280 (JP)**

• **OKAMOTO, Takashi
Ibaraki 312-8503 (JP)**

(74) Representative: **MERH-IP Matias Erny Reichl Hoffmann
Patentanwälte PartG mbB
Paul-Heyse-Strasse 29
80336 München (DE)**

(56) References cited:
JP-A- H11 324 778       JP-A- 2001 107 758
JP-A- 2003 328 815      JP-A- 2007 040 150
JP-A- 2007 247 485      JP-A- 2009 019 538
JP-A- 2010 048 194      US-A1- 2001 015 192
US-A1- 2005 000 486     US-A1- 2009 299 610
US-A1- 2011 203 553

# Description

Technical Field

The present invention relates to a control apparatus of a cylinder injection engine.

JP H11 324778 A discloses a control apparatus of a cylinder engine, wherein the fuel injection time period is adapted to the exhaust valve closing time and the intake valve opening time. A similar control unit is disclosed in US 2005/000486 A1. Further, motor control apparatuses are described in JP 2001 107758 A, US 2011/203553 A1, JP 2007 247485 A, US 2009/299610 A1 and US 2001/015192 A1.

Background Art

Because a cylinder injection engine directly injects fuel toward a combustion chamber, the injected fuel is easily adhered to a wall surface of a piston, and therefore, there is a problem that emissions of particulate matters (PMs) from the cylinder injection engine are more than those from a port injection engine. In particular, the fuel cannot be warmed because an oil water temperature is low immediately after the engine is started (cranking), and thus, emissions of PMs are more than those after warming-up.

In order to reduce such adhesion of fuel to the wall surface of the piston in a cold state, there is means for injecting fuel at approximately an intake stroke top dead center in a state in which high-temperature combustion gas remains before an intake valve is opened. Even in a condition in which the oil water temperature in a cold state is 20°C which is low, residual gas has about 600°C which is an extremely high temperature, and therefore, the injected fuel can be vaporized in a short period of time. This makes it possible to largely reduce the adhesion of fuel to the piston.

With this means, fuel is controlled to be injected after a timing at which an exhaust valve is closed but before a timing at which the intake valve is opened. (If the fuel is injected before the timing at which the exhaust valve is closed, unburned fuel is exhausted from an exhaust pipe, and therefore unburned hydrocarbon is increased and fuel efficiency is deteriorated. If the fuel is injected after the timing at which the intake valve is opened, fresh gas is inhaled, and therefore the adhesion of fuel to the piston is increased due to lowering of a temperature and deterioration in vaporization.)

As described in PTL 1, there is a technique in which, in a case where an injection time period is prolonged due to increase in a fuel injection amount, adhesion of fuel to a piston is reduced by prolonging a time period from an exhaust valve closing timing to an intake valve opening timing by early closing an exhaust valve in accordance with the increase in the fuel injection amount.

Citation List

Patent Literature

PTL 1: JP-A-2009-19583

Summary of Invention

Technical Problem

In a condition in which a rotation speed of an engine is low and a fuel injection amount is small like an idle condition, an advance amount of an exhaust valve is small because a fuel injection time period is short, and therefore influence of increase in residual gas is small. However, in a case where the fuel injection time period is prolonged due to increase in the rotation speed of the engine and increase in a load, it is necessary to increase the advance amount of the exhaust valve in accordance with this prolonged fuel injection time period. Therefore, in a method in which only the exhaust valve is controlled as described in the above conventional art, fuel vaporization is promoted, however, combustion fluctuation is increased and a combustion speed is decreased due to increase in a residual gas amount, which influences deterioration in fuel efficiency accordingly. Further, necessary fresh gas cannot be supplied due to increase in residual gas, and therefore an operable region is reduced.

On the contrary, in a method in which only the intake valve is controlled in a case where the fuel injection time period is prolonged, a volume is expanded due to lowering of a piston, and therefore adhesion of fuel to the piston is increased due to decrease in a cylinder internal pressure and a temperature. Thus, PMs are increased.

Solution to Problem

An object of the invention is to reduce PMs in a wide operation region while suppressing influence on exhaust and fuel efficiency in a case where a fuel injection time period is prolonged due to increase in a rotation speed of an engine and increase in a load, and, by controlling intake and exhaust valves so that an exhaust valve closing timing becomes earlier and an intake valve opening timing becomes later as the fuel injection time period is prolonged, the invention suppresses increase in combustion fluctuation and deterioration in fuel efficiency caused by residual gas while keeping a temperature in a combustion chamber so as not to deteriorate vaporization.

In order to solve the aforementioned problems, the present invention proposes a control apparatus having the features defined in claim 1.

Advantageous Effects of Invention

Deterioration in exhaust and fuel efficiency caused by increase in residual gas is suppressed while adhesion of fuel to a piston is reduced.

Brief Description of Drawings

[Fig. 1] Fig. 1 illustrates a structure of a cylinder direct injection engine according to the invention.
[Fig. 2] Fig. 2 shows operating points in Examples 1 and 2.
[Fig. 3] Fig. 3 shows a rotation speed and filling efficiency in operating points in Examples 1 and 2.
[Fig. 4] Fig. 4 shows profiles of an intake valve and an exhaust valve during a minimum fuel injection time period.
[Fig. 5] Fig. 5 shows changes in $\alpha$ and $\beta$ with respect to $\gamma$ in Example 1.
[Fig. 6] Fig. 6 shows changes in $\alpha$ and $\beta$ with respect to $\gamma$ in Example 2 (example 2 is an embodiment, which is helpful for understanding the present invention).
[Fig. 7] Fig. 7 shows profiles of an intake valve 7 and an exhaust valve 8 and a fuel injection signal in a condition B.
[Fig. 8] Fig. 8 shows profiles of an intake valve 7 and an exhaust valve 8 and a fuel injection signal in a condition C.
[Fig. 9] Fig. 9 shows profiles of an intake valve 7 and an exhaust valve 8 and a fuel injection signal in a condition B.
[Fig. 10] Fig. 10 shows profiles of an intake valve 7 and an exhaust valve 8 and a fuel injection signal in a condition C.
[Fig. 11] Fig. 11 shows data of an exhaust valve advance amount $\alpha$, an intake valve delay amount $\beta$, and $\alpha + \beta$ with respect to an injection time period increase amount $\gamma$ (the data shown in said figure is helpful for understanding the present invention).
[Fig. 12] Fig. 12 shows a change in $\alpha/(\alpha+\beta)$ with respect to $\gamma$ (the data shown in said figure is helpful for understanding the present invention).
[Fig. 13] Fig. 13 is an explanatory view showing Example 3.
[Fig. 14] Fig. 14 is an explanatory view showing Example 3.

Description of Embodiments

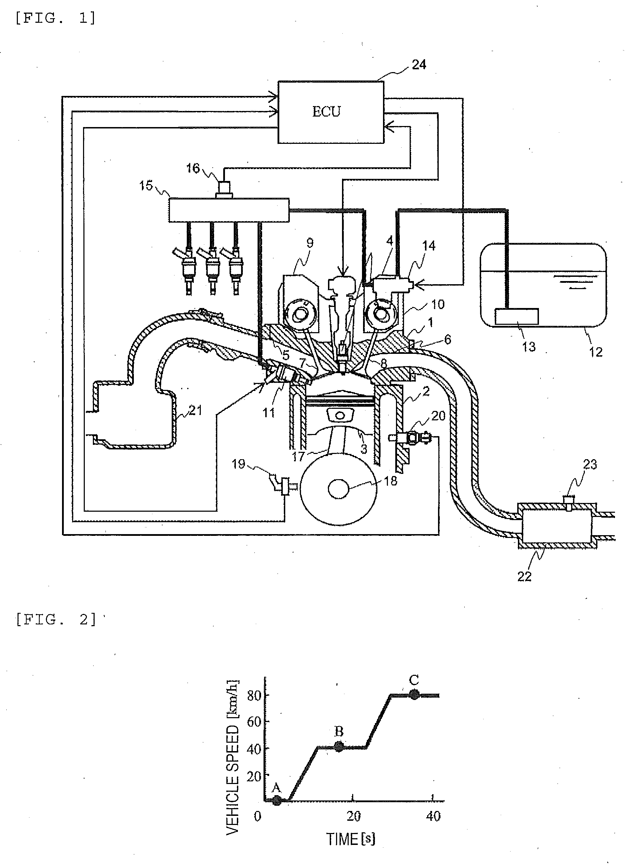

This embodiment is applied in a cold condition in which an oil water temperature is low,
a time period from a timing at which an exhaust valve is closed to a timing at which an intake valve is opened is defined as a fuel injectable time period, and a fuel injection time period is set so that all or almost all fuel is injected during the fuel injectable time period,
when an exhaust valve advance amount from a reference position is defined as $\alpha$, an intake valve delay amount from the reference position is defined as $\beta$, and a fuel injection time period increase amount is defined as $\gamma$ on the basis of an exhaust valve closing timing, an intake valve opening timing, and the fuel injection time period in a condition in which the fuel injection time period is shortest in idle, the intake and exhaust valves are controlled so that $\alpha + \beta$ is increased as $\gamma$ is increased, and $\beta > \alpha$ is satisfied in a condition in which $\gamma$ becomes maximum which is an upper limit of an application range.
Further, the intake and exhaust valves are controlled so that only $\alpha$ is increased in a region in which $\gamma$ is small and only $\beta$ is increased in a region in which $\gamma$ is large. With this method, a temperature in a cylinder can be raised by operating the exhaust valve first, and therefore vaporization can be promoted even in a case where an engine is accelerated in a condition in which a fuel temperature is low immediately after the engine is started. Thus, a suppression effect of adhesion of fuel to a piston is high.
Further, the intake and exhaust valves are controlled so that $\alpha$ and $\beta$ are simultaneously increased as $\gamma$ is increased. With this method, increase in $\gamma$ can be shared by $\alpha$ and $\beta$, so that a change amount is small, as compared with a case where only the exhaust value $\alpha$ or only the intake value $\beta$ is changed. Therefore, this method has an advantage of good response.
Further, the intake and exhaust valves are controlled so that a ratio of $\alpha$ to a total change amount obtained by adding $\alpha$ to $\beta$ is increased as $\gamma$ is increased. With this method, increase in residual gas can be kept to minimum in a range in which $\gamma$ is small, so that there is almost no influence on combustion fluctuation and fuel efficiency.
Further, when the fuel injection time period increase amount $\gamma$ becomes larger than a predetermined value, an injection timing is changed so that fuel is injected after the intake valve is opened in an intake stroke. This makes it possible to suppress a phenomenon that a residual gas amount is excessively increased and necessary air cannot be inhaled, and therefore, deterioration in exhaust caused by enrichment of the fuel can be prevented.
A structure of a cylinder injection engine in Example 1 according to the invention is illustrated in Fig. 1. This structure includes an inline four-cylinder engine including cylinders each of which has 400 cc.
A cylinder head 1, a cylinder block 2, and a piston 3 inserted into the cylinder block 2 form a combustion chamber, and a spark plug 4 is provided above a center of the combustion chamber. An intake pipe 5 and an exhaust pipe 6 are opened toward the combustion chamber, and an intake valve 7 and an exhaust valve 8 for opening and closing respective opening portions are provided. The exhaust valve and the intake valve are operated with a cam operation method and are rotated in conjunction with a crankshaft. Electromotively-driven type variable mechanisms are also provided, and a phase of the intake valve 7 is changed by an intake valve variable mechanism 9 and a phase of the exhaust valve 8 is changed by an exhaust valve variable mechanism 10.

A fuel injection valve 11 is provided on an intake side of the combustion chamber so that fuel can be directly injected toward the combustion chamber.

The fuel is stored in a fuel tank 12 and is fed to a high pressure pump 14 by a feed pump 13 through a fuel pipe. The high pressure pump 14 is driven by an exhaust cam, and boosted fuel is fed to a common rail 15. The feed pump 11 boosts a pressure of the fuel by about 0.3 MPa, meanwhile, the high pressure pump 14 can boost a pressure of the fuel to 20 MPa. A combustion pressure sensor 16 is provided to the common rail 14 so as to detect a fuel pressure. Injectors for the four cylinders are connected to the common rail 14.

The piston 3 is linked with a crankshaft 18 via a connecting rod 17, and a rotation speed of the engine can be detected by a crank angle sensor 19. A starter motor (not shown) is linked with the crankshaft 18, and the engine can be started by rotating the crankshaft with the use of the starter motor at the time of starting the engine.

A water temperature sensor 20 is attached to the cylinder block 2 and can detect a temperature of engine cooling water. A collector 21 is connected to an upper stream of the intake pipe. Although not shown, an air flow sensor and a throttle valve are provided to an upper stream of the collector, and an air volume inhaled into the combustion chamber can be adjusted by opening and closing a throttle. Only a single cylinder is illustrated in Fig. 1, however, air is distributed to each cylinder from the collector 21. Not only a three-way catalyst 22 and a catalyst temperature sensor 23 but also, although not shown, an air-fuel ratio sensor, an oxygen concentration sensor, and the like are provided to a lower stream of the exhaust pipe. An engine control unit (ECU 24) is connected to receive signals from various sensors, perform internal arithmetic, and then control devices such as the intake valve variable mechanism 9, the exhaust valve variable mechanism 10, the fuel injection valve 11, and the high pressure fuel pump 14. In a ROM in the ECU 24, set values of the various devices corresponding to the rotation speed of the engine, a water temperature, a catalyst temperature, and an air-fuel ratio that are generally used are stored as map data, and data of a valve closing timing of the intake valve 7 and a valve opening timing of the exhaust valve 8 with respect to the fuel injection time period in a cold state, which are features of the invention, are also stored.

Note that all examples are assumed to be performed in a cold condition, and a fuel injection amount and the air volume are controlled so that an operation air-fuel ratio is 14.5 with respect to a required load from an accelerator.

Example 1 will be described with reference to Figs. 2 to 5. In this example, an operation from idle (A) through a vehicle speed of 40 km/h (B) to a vehicle speed of 80 km/h (C) will be described as shown in Fig. 2.

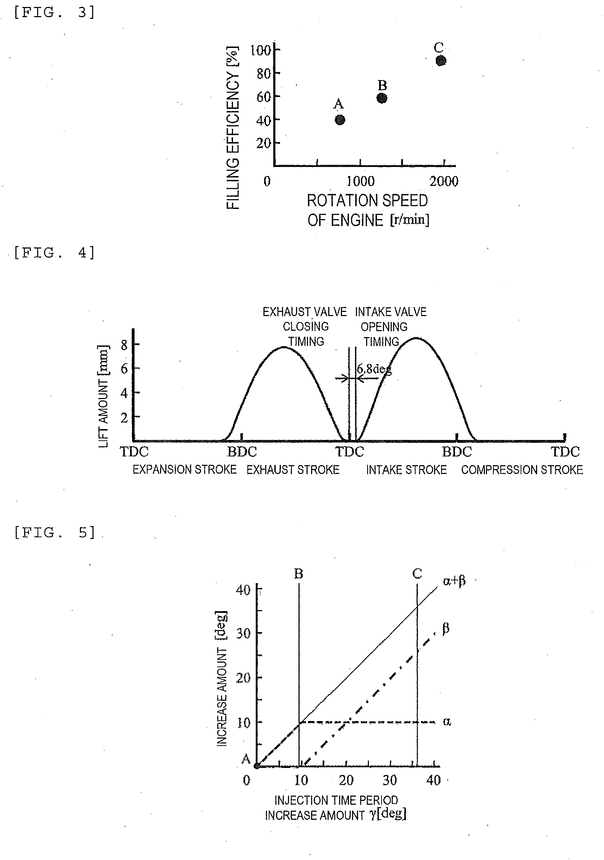

A rotation speed of the engine and filling efficiency in each of the conditions A, B, and C are shown in Fig. 3. The condition A is the rotation speed of 750 r/min and the filling efficiency of 40%, the condition B is the rotation speed of 1250 r/min and the filling efficiency of 60%, and the condition C is the rotation speed of 2000 r/min and the filling efficiency of 90%.

The fuel pressure in this example is fixed to 5 MPa, and, in accordance with increase in the filling efficiency (load), an injection pulse time becomes longer, specifically, the injection pulse time in the condition A is 1.5 ms, the injection pulse time in the condition B is 2.2 ms, and the injection pulse time in the condition C is 3.6 ms. When the injection pulse time is converted into a crank angle at the rotation speed in each condition, the fuel injection time period in the condition A is 6.8 deg., the fuel injection time period in the condition B is 16.5 deg., and the fuel injection time period in the condition C is 43.2 deg.

Profiles of the intake valve 7 and the exhaust valve 8 and a fuel injection signal in the condition A are shown in Fig. 4. In this example, because the fuel injection time period in the idle condition A in which the rotation speed, the injection amount, and the fuel pressure are minimum is 6.8 deg., a fuel injection start timing was set to TDC and a fuel injection completion timing was set to 6.8 deg. ATDC. In order to set a fuel injectable time period after the exhaust valve is closed but before the intake valve is opened to 6.8 deg., the exhaust valve closing timing was set to TDC and the- intake valve opening timing was set to 6.8 deg. Herein, based on the condition A, the exhaust valve advance amount is defined as $\alpha$, the intake valve delay amount is defined as $\beta$, and the injection time period increase amount is defined as $\gamma$.

Because the fuel injection time period in the condition B is 16.5 deg., $\gamma$ is 9.7 deg., and, because the fuel injection time period in the condition C is 43.2 deg., $\gamma$ is 36.4 deg.

In this example, the fuel is controlled to be injected during a time period after the exhaust valve is closed but before the intake valve is opened, and operations of $\alpha$ and $\beta$ are determined so as to satisfy $\alpha + \beta = \gamma$. Only $\alpha$ is increased until $\gamma$ becomes 10 deg. and only $\beta$ is increased after $\gamma$ becomes 10 deg. Data of the exhaust valve advance amount $\alpha$, the intake valve delay amount $\beta$, and $\alpha + \beta$ with respect to the injection time period increase amount are shown in Fig. 5.

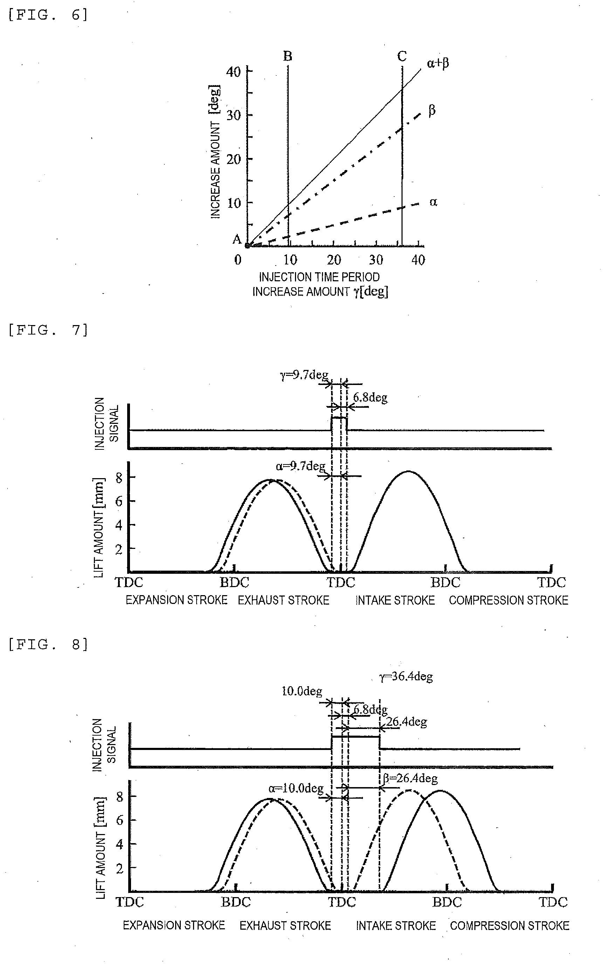

Profiles of the intake valve 7 and the exhaust valve 8 and a fuel injection signal in the condition B are shown in Fig. 7. Because $\gamma$ is 9.7 deg., i.e., less than 10 deg. in the condition B, the injectable time period is controlled to be prolonged by advancing only the exhaust valve, and $\alpha$ is determined to be 9.7 deg. and $\beta$ is determined to be 0 deg.

Profiles of the intake valve 7 and the exhaust valve 8 and a fuel injection signal in the condition C are shown in Fig. 8. Because $\gamma$ is 36.4 deg., i.e., more than 10 deg. in the condition C, the injectable time period is controlled to be prolonged by advancing the exhaust valve and delaying the intake valve, and $\alpha$ is determined to be 10.0 deg. and $\beta$ is determined to be 26.4 deg.

Note that, in this example, the invention is applied in a condition in which $\gamma$ is 40 deg. or less, and, in a condition in which $\gamma$ exceeds 40 deg., such control is performed by normal intake stroke injection.

The fuel injection start timing is set to be the exhaust valve closing timing, and therefore not only the exhaust valve advance amount $\alpha$ but also the injection start timing is advanced in accordance with $\gamma$. The fuel injection start timing in the condition A is TDC, the fuel injection start timing in the condition B is set to 9.7 deg. BTDC because $\alpha$ is 9.7 deg., and the fuel injection start timing in the condition C is set to 10.0 deg. BTDC because $\alpha$ is 10.0 deg.

An action in this example will be described. Immediately after the engine is started, whether or not the engine enters a generally used catalyst warming-up mode is determined based on input signals from the water temperature sensor 20 and the catalyst temperature sensor 23. Herein, assuming that the engine enters the catalyst warming-up mode, temperature rise control is performed by divided injection and ignition retard in an intake stroke and a compression stroke. Then, the temperature rise control is cancelled when the catalyst temperature reaches an active temperature.

In this example, a condition for cancelling the temperature rise control is set to the condition A which is the rotation speed of the engine of 750 r/min, i.e., the idle condition, and the fuel pressure is set to a minimum fuel pressure of 5 MPa which is used in a normal operation. At the same time when the temperature rise control is cancelled, whether the engine is in the cold state or a warm state is determined by the water temperature sensor 20. Herein, assuming that the water temperature is 30°C, the engine is determined to be in the cold state. A determination temperature of the cold state and the warm state cannot be definitely determined, however, herein, the determination temperature is inputted to the ECU 24 such that the engine is determined to be in the warm state when the water temperature is 60°C or more. When the engine is determined to be in the cold state, the fuel injection time period is calculated based on an injection pulse width with the use of the rotation speed calculated by the crank angle sensor 19.

In this example, a minimum fuel injection time period of 6.8 deg. is stored in the ECU 24, and $\gamma$ is obtained by subtracting 6.8 deg. from the fuel injection time period calculated as described above. Because the fuel injection time period is 6.8 deg. in the idle, $\gamma$ is determined to be zero and is inputted to the ECU 24. The intake valve variable mechanism 9 and the exhaust valve variable mechanism 10 are controlled to form a state shown in Fig. 4. The fuel injection start timing is set to TDC.

The required torque is determined to be increased when the accelerator is stepped on, and a target fuel injection amount for each cylinder is determined based on information on accelerator opening and the rotation speed of the engine. Herein, the vehicle speed of 40 km/h and the fuel injection amount of 18.2 mg in the condition B are determined by the ECU 24. The fuel pressure is determined to be 5 MPa based on a signal from the fuel pressure sensor 16, and the injection pulse time of 2.2 ms is calculated. The rotation speed of the engine of 1250 r/min is calculated by the crank angle sensor 19, and the fuel injection time period of 16.5 deg. is calculated. The minimum fuel injection time period of 6.8 deg. in the condition A is subtracted from 16.5 deg., and thus $\gamma$ = 9.7 deg. is calculated. Based on the data in Fig. 5, $\alpha$ is advanced by 9.7 deg., so that the exhaust valve closing timing becomes 9.7 deg. BTDC, and $\beta$ keeps 0 deg, so that the intake valve opening timing of 6.8 deg. is maintained. The throttle is controlled to achieve an inhalation air volume so that the air-fuel ratio is 14.5 with respect to the injection amount.

The fuel injection start timing is advanced by 9.7 deg. which is same as $\alpha$ and becomes 9.7 deg. BTDC. The time period after the exhaust valve is closed but before the intake valve is opened is 9.7 + 6.8, i.e., 16.5 deg., which is same as the fuel injection time period.

In the condition C in which the vehicle speed is 80 km/h when the accelerator is further stepped on, the target fuel injection amount of 29.5 mg for each cylinder is determined by the ECU 24 based on the information on the accelerator opening and the rotation speed of the engine. The fuel pressure is determined to be 5 MPa based on a signal from the fuel pressure sensor 16, and the injection pulse time of 3.6 ms is calculated. The rotation speed of the engine of 2000 r/min is calculated by the crank angle sensor 19, and the fuel injection time period of 43.2 deg. is calculated. The minimum fuel injection time period of 6.8 deg. in the condition A is subtracted from 43.2 deg., and thus $\gamma$ = 36.4 deg. is calculated. In the condition C, based on the data in Fig. 5, $\alpha$ is advanced by +10.0 deg. and $\beta$ is advanced by +26.4 deg., so that the exhaust valve closing timing becomes 10 deg. BTDC, and, by adding 6.8 deg. to 26.4, the intake valve opening timing becomes 33.2 deg. ATDC. The throttle is controlled to achieve the inhalation air volume so that the air-fuel ratio is 14.5 with respect to the injection amount.

The fuel injection start timing is advanced by 10.0 deg. which is same as $\alpha$ and becomes 10.0 deg. BTDC. The time period after the exhaust valve is closed but before the intake valve is opened is 10.0 + 6.8 + 26.4, i.e., 43.2 deg., which is same as the fuel injection time period.

Example 2 will be described with reference to Figs. 6, 9, and 10 (example 2 is an embodiment which is helpful for understanding the present invention, however the present invention is defined by claim 1). Data of the exhaust valve advance amount $\alpha$, the intake valve delay amount $\beta$, and $\alpha + \beta$ with respect to the injection time period increase amount $\gamma$ in this example are shown in Fig. 6. Example 2 is different from Example 1 in that both $\alpha$ and $\beta$ are increased in accordance with increase

in $\gamma$. Herein, $\alpha$ is set to 27.5% and $\beta$ is set to 72.5% with respect to an increase amount of $\alpha + \beta$. The other points are same as those in Example 1.

Profiles of the intake valve 7 and the exhaust valve 8 in the condition A serving as a reference are same as those in Example 1 shown in Fig. 4.

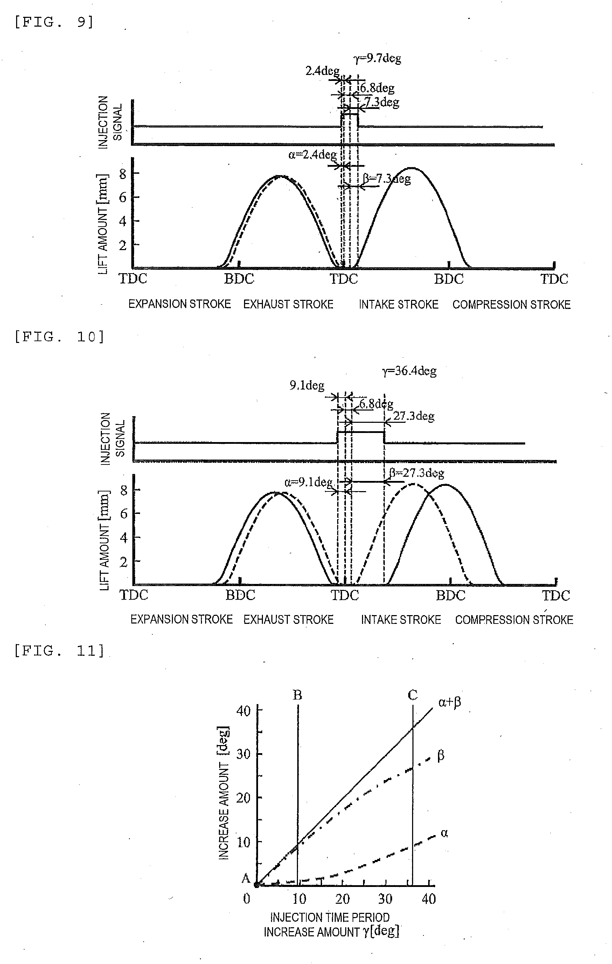

Profiles of the intake valve 7 and the exhaust valve 8 and a fuel injection signal in the condition B are shown in Fig. 9. In Example 2, because $\alpha$ is determined to be 27.5% and $\beta$ is determined to be 72.5%, the exhaust and intake valves are controlled so that $\alpha$ is 2.4 deg. and $\beta$ is 7.3 deg. in a case where $\gamma$ is 9.7 deg.

Profiles of the intake valve 7 and the exhaust valve 8 and a fuel injection signal in the condition C are shown in Fig. 10. In the condition C, $\gamma$ is 36.4 deg., and, because $\alpha$ is determined to be 27.5% and $\beta$ is determined to be 72.5% with respect to $\gamma$, $\alpha$ is determined to be 9.1 deg. and $\beta$ is determined to be 27.3 deg.

An operation of Example 2 will be described. Operating points are in conditions A, B, and C which are same as those in Example 1 shown in Figs. 2 and 3.

The operation until the condition A is same as that in Example 1, and therefore description thereof is omitted.

In condition B, the fuel injection time period is 16.5 deg., and the minimum fuel injection time period of 6.8 deg. in the condition A is subtracted from 16.5 deg., and thus $\gamma$ = 9.7 deg. is calculated. Based on the data in Fig. 6, $\alpha$ is advanced by 2.7 deg., so that the exhaust valve closing timing becomes 2.7 deg. BTDC, and $\beta$ is delayed by 7.0 deg., so that the intake valve opening timing becomes 6.8 + 7.0, i.e., 13.8 deg. ATDC.

The fuel injection start timing is advanced by 2.7 deg. which is same as $\alpha$ and becomes 2.7 deg. BTDC. The time period after the exhaust valve is closed but before the intake valve is opened is 2.7 + 13.8, i.e., 16.5 deg., which is same as the fuel injection time period.

In the condition C, the fuel injection time period is 43.2 deg., and the minimum fuel injection time period of 6.8 deg. in the condition A is subtracted from 43.2 deg., and thus $\gamma$ = 36.4 deg. is calculated. Based on the data in Fig. 6, $\alpha$ is advanced by 10.0 deg., so that the exhaust valve closing timing becomes 10 deg. BTDC, and, by adding 6.8 deg. to 26.4, the intake valve opening timing becomes 33.2 deg. ATDC.

The fuel injection start timing is advanced by 10 deg. which is same as $\alpha$ and becomes 10 deg. BTDC. The time period after the exhaust valve is closed but before the intake valve is opened is 10 + 6.8 + 26.4, i.e., 43.2 deg., which is same as the fuel injection time period.

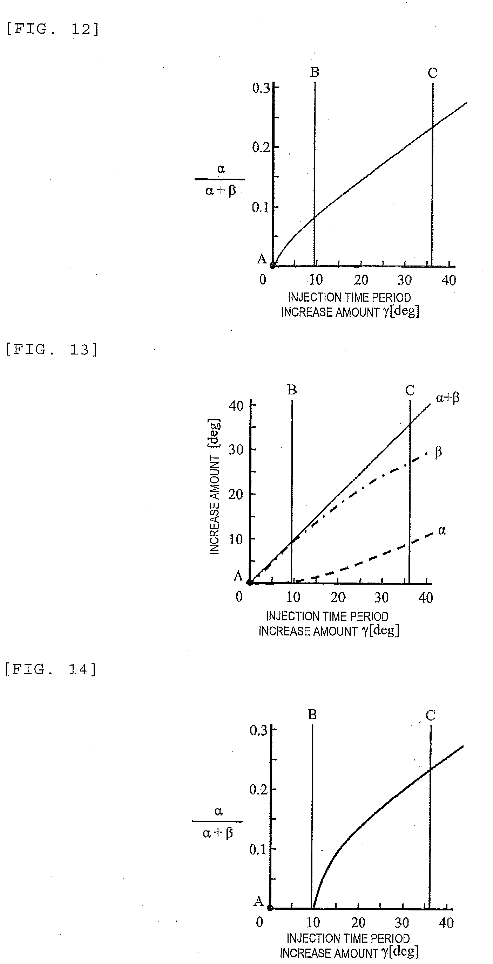

Example 3 will be described with reference to Figs. 11 and 12 (example 3 is an embodiment which is helpful for understanding the present invention, however, the present invention is defined by claim 1). Data of the exhaust valve advance amount $\alpha$, the intake valve delay amount $\beta$, and $\alpha + \beta$ with respect to the injection time period increase amount $\gamma$ in this example are shown in Fig. 11. Example 3 is different from Example 2 in that a

ratio of $\alpha$ to a total change amount $\alpha + \beta$ of the intake valve and the exhaust valve is increased as $\gamma$ is increased while both $\alpha$ and $\beta$ are simultaneously increased in accordance with increase in $\gamma$. Fig. 12 shows a change in $\alpha/(\alpha+\beta)$ with respect to $\gamma$. The other points are same as those in Examples 1 and 2.

Profiles of the intake valve 7 and the exhaust valve 8 in the condition A serving as a reference are same as those in Example 1 shown in Fig. 4.

$\alpha$ and $\beta$ in the conditions B and C are determined based on Fig. 11. In a case where $\gamma$ is 9.7 deg. in the condition B, the exhaust and intake valves are controlled so that $\alpha$ is 0.8 deg. and $\beta$ is 8.9 deg., and, in a case where $\gamma$ is 36.4 deg. in the condition C, the exhaust and intake valves are controlled so that $\alpha$ is 8.7 deg. and $\beta$ is 27.7 deg.

An operation of Example 3 will be described. Operating points are in conditions A, B, and C which are same as those in Example 1 shown in Figs. 2 and 3.

The operation until the condition A is same as that in Example 1, and therefore description thereof is omitted.

In condition B, the fuel injection time period is 16.5 deg., and the minimum fuel injection time period of 6.8 deg. in the condition A is subtracted from 16.5 deg., and thus $\gamma$ = 9.7 deg. is calculated. Based on the data in Fig. 11, $\alpha$ is advanced by 0.8 deg., so that the exhaust valve closing timing becomes 0.8 deg. BTDC, and $\beta$ is delayed by 8.9 deg., so that the intake valve opening timing becomes 6.8 + 8.9, i.e., 15.7 deg. ATDC.

The fuel injection start timing is advanced by 0.8 deg. which is same as $\alpha$ and becomes 0.8 deg. BTDC. The time period after the exhaust valve is closed but before the intake valve is opened is 0.8 + 15.7, i.e., 16.5 deg., which is same as the fuel injection time period.

In the condition C, the fuel injection time period is 43.2 deg., and the minimum fuel injection time period of 6.8 deg. in the condition A is subtracted from 43.2 deg., and thus $\gamma$ = 36.4 deg. is calculated. Based on the data in Fig. 11, $\alpha$ is advanced by 8.7 deg., so that the exhaust valve closing timing becomes 8.7 deg. BTDC, and $\beta$ is delayed by 27.7 deg. and 6.8 deg. is added to 27.7, so that the intake valve opening timing becomes 34.5 deg. ATDC.

The fuel injection start timing is advanced by 8.7 deg. which is same as $\alpha$ and becomes 8.7 deg. BTDC. The time period after the exhaust valve is closed but before the intake valve is opened is 8.7 + 6.8 + 27.7, i.e., 43.2 deg., which is same as the fuel injection time period.

Note that, as shown in Fig. 13 and Fig. 14, the ratio of $\alpha$ to the total change amount $\alpha + \beta$ of the intake valve and the exhaust valve with respect to $\gamma$ in Example 3 is such that only $\alpha$ is increased until $\gamma$ becomes 10 deg., and, when $\gamma$ becomes larger than 10 deg., the ratio of $\alpha$ to the total change amount $\alpha + \beta$ of the intake valve and the exhaust valve is increased as $\gamma$ is increased. Thus, it is possible to obtain the same effect as that in Example 3.

In Example 1, a maximum value of the intake valve delay amount is set to be larger than a maximum value of the exhaust valve advance amount, and therefore it is possible to suppress increase in combustion fluctuation and deterioration in fuel efficiency caused by residual gas while keeping a temperature in the combustion chamber so as not to deteriorate vaporization. Further, by increasing only $\alpha$ in a region in which $\gamma$ is small and by increasing only $\beta$ in a - region in which $\gamma$ is large, a raising effect of a temperature in the cylinder caused by residual gas can be early obtained, and therefore, vaporization can be promoted even in a case where the engine is accelerated in a condition in which a fuel temperature is low immediately after the engine is started. Thus, a suppression effect of adhesion of fuel to the piston is high.

In Example 2, the intake and exhaust valves are controlled so that $\alpha$ and $\beta$ are simultaneously increased as $\gamma$ is increased. With this method, increase in residual gas can be kept to minimum, so that there is almost no influence on combustion fluctuation and fuel efficiency. Further, increase in $\gamma$ can be shared by $\alpha$ and $\beta$, so that a change amount is small, as compared with a case where only the exhaust value $\alpha$ or only the intake value $\beta$ is changed. Therefore, this method has an advantage of good response.

In Example 3, the intake and exhaust valves are controlled so that the ratio of $\alpha$ to the total change amount obtained by adding $\alpha$ to $\beta$ is increased as $\gamma$ is increased. With this method, increase in residual gas can be kept to minimum in a range in which $\gamma$ is small, and therefore, it is possible to reduce exhaust without influencing combustion fluctuation and fuel efficiency.

Reference Signs List

1 ... cylinder head
2 ... cylinder block
3... piston
4 ... spark plug
5 ... intake pipe
6 ... exhaust pipe
7 ... intake valve
8 ...exhaust valve
9 ... intake valve variable mechanism
10 ... exhaust valve variable mechanism
11 ... fuel injection valve
12 ... fuel tank
13 ... feed pump
14 ... high pressure pump
15 ... common rail
16 ... fuel pressure sensor
17 ... connecting rod
18 ... crankshaft
19 ... crank angle sensor
20 ... water temperature sensor
21 ... collector
22 ... three-way catalyst
23 ... catalyst temperature sensor
24 ... ECU

Claims

1. A control apparatus (24) of a cylinder direct injection engine, the engine including an intake valve variable mechanism (9) and an exhaust valve variable mechanism (10), wherein,
in a cold condition of the cylinder direct injection engine, the control apparatus (24)is adapted to control an exhaust valve closing timing, an intake valve opening timing, and a fuel injection time period such that:

a time period from a timing at which an exhaust valve is closed to a timing at which an intake valve is opened is defined as a fuel injectable time period, and a fuel injection time period is set so that all or almost all fuel is injected during the fuel injectable time period,
the fuel injection start timing is set to be the exhaust valve closing timing, the intake valve opening timing in the idle condition is set to the fuel injection completion timing, and
when an exhaust valve advance amount from the exhaust valve closing timing in the idle condition is defined as $\alpha$, measured in [deg.], an intake valve delay amount from the intake valve opening timing in the idle condition is defined as $\beta$, measured in [deg.], and a fuel injection time period increase amount is defined as $\gamma$, measured in [deg.],
on the basis the fuel injection time period in a condition in which the fuel injection time period is minimum in idle, the intake and exhaust valves are controlled so that $\alpha + \beta$ is increased as $\gamma$ is increased, so as to satisfy:

$$\alpha + \beta = \gamma,$$

wherein only $\alpha$ is increased in a region in which $\gamma$ is small and only $\beta$ is increased in a region in which $\gamma$ is large, and
$\beta > \alpha$ in a condition in which $\gamma$ becomes maximum which is an upper limit of an application range.

Patentansprüche

1. Steuervorrichtung (24) einer Kraftmaschine mit Zylinderdirekteinspritzung, wobei die Kraftmaschine einen variablen Einlassventilmechanismus (9) und einem variablen Auslassventilmechanismus (10) enthält, wobei

die Steuervorrichtung (24) dafür ausgelegt ist, in einem kalten Zustand der Kraftmaschine mit Zylinderdirekteinspritzung eine Auslassventil-Schließzeit, eine Einlassventil-Öffnungszeit und eine Kraftstoffeinspritzzeitdauer zu steuern, derart, dass:

eine Zeitdauer von einem Zeitpunkt, zu dem ein Auslassventil geschlossen wird, zu einem Zeitpunkt, zu dem ein Einlassventil geöffnet wird, als eine Zeitdauer, in der Kraftstoff eingespritzt werden kann, definiert ist und eine Kraftstoffeinspritzzeitdauer so eingestellt ist, dass der gesamte Kraftstoff oder nahezu der gesamte Kraftstoff während der Zeitdauer, in der Kraftstoff eingespritzt werden kann, eingespritzt wird,

die Kraftstoffeinspritzstartzeit als Auslassventil-Schließzeit eingestellt ist und die Einlassventil-Öffnungszeit im Leerlaufzustand auf die Zeit des Endes der Kraftstoffeinspritzung eingestellt ist, und

dann, wenn ein Auslassventil-Voreilungsbetrag in Bezug auf die Auslassventil-Schließzeit im Leerlaufzustand durch $\alpha$ definiert ist und in [Grad] gemessen wird, ein Einlassventil-Nacheilungsbetrag in Bezug auf die Einlassventil-Öffnungszeit im Leerlaufzustand durch $\beta$ definiert ist und in [Grad] gemessen wird und ein Kraftstoffeinspritzzeitdauer-Erhöhungsbetrag durch $\gamma$ definiert ist und in [Grad] gemessen wird, anhand der Kraftstoffeinspritzzeitdauer in einem Zustand, in dem die Kraftstoffeinspritzzeitdauer im Leerlauf minimal ist, die Einlass- und Auslassventile in der Weise gesteuert werden, dass $\alpha + \beta$ zunimmt, wenn $\gamma$ erhöht wird, um Folgendes zu erfüllen:

$$\alpha + \beta = \gamma,$$

wobei in einem Bereich, in dem $\gamma$ klein ist, nur $\alpha$ erhöht wird, und in einem Bereich, in dem $\gamma$ groß ist, nur $\beta$ erhöht wird, und
$\beta > \alpha$ in einem Zustand erfüllt ist, in dem $\gamma$ maximal wird, was eine obere Grenze eines Anwendungsbereichs ist.

## Revendications

1. Appareil de commande (24) d'un moteur à injection directe en cylindre, le moteur incluant un mécanisme variable de soupape d'admission (9) et un mécanisme variable de soupape d'échappement (10), dans lequel

dans une condition à froid du moteur à injection directe en cylindre, l'appareil de commande (24) est adapté pour commander un instant de fermeture de la soupape d'échappement, un instant d'ouverture de la soupape d'admission, et une période temporelle d'injection de carburant, de façon que :

une période temporelle depuis un instant auquel une soupape d'échappement est fermée jusqu'à un instant auquel une soupape d'échappement est ouverte est définie comme période temporelle injectable pour le carburant, et une période temporelle d'injection de carburant est fixée de telle façon que la totalité ou presque la totalité du carburant est injectée pendant la période temporelle injectable pour le carburant,

l'instant de départ d'injection de carburant est fixé pour être l'instant de fermeture de la soupape d'échappement, l'instant d'ouverture de la soupape d'admission dans la condition au ralenti est fixé à l'instant de terminaison d'injection du carburant, et

quand une valeur de l'avance de la soupape d'échappement depuis l'instant de fermeture de la valve d'échappement dans la condition au ralenti est définie par $\alpha$, mesurée en [degrés], une valeur de retard de la soupape d'admission depuis l'instant d'ouverture de la soupape d'admission dans la condition au ralenti est définie par $\beta$, mesurée en [degrés], et une valeur d'augmentation de la période temporelle injection de carburant est définie par $\gamma$, mesurée en [degré],

sur la base de la période temporelle d'injection du carburant dans une condition dans laquelle la période temporelle d'injection du carburant est minimum au ralenti, la soupape d'admission et la soupape d'échappement sont commandés de telle façon que $\alpha + \beta$ est augmentée lorsque $\gamma$ est augmenté, de manière à satisfaire :

$$\alpha + \beta = \gamma,$$

dans laquelle uniquement $\alpha$ est augmenté dans une région dans laquelle $\gamma$ est petit, et uniquement $\beta$ est augmenté dans une région dans laquelle $\gamma$ est grand, et
$\beta > \alpha$ dans une condition dans laquelle $\gamma$ devient maximum, qui est une limite supérieure d'une plage d'application.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

**EP 2 902 607 B1**

**REFERENCES CITED IN THE DESCRIPTION**

**Patent documents cited in the description**

- JP H11324778 A
- US 2005000486 A1
- JP 2001107758 A
- US 2011203553 A1
- JP 2007247485 A
- US 2009299610 A1
- US 2001015192 A1
- JP 2009019583 A